**Europäisches Patentamt**

**European Patent Office**

**Office européen des brevets**

(19)

(11) Publication number: **0 057 574**
**A1**

# (12) EUROPEAN PATENT APPLICATION

(21) Application number: 82300446.0

(51) Int. Cl.³: **G 05 D 23/19**

(22) Date of filing: 28.01.82

(30) Priority: 30.01.81 US 229689

(43) Date of publication of application: 11.08.82
Bulletin 82/32

(84) Designated Contracting States: DE FR SE

(71) Applicant: HONEYWELL INC., Honeywell Plaza,
Minneapolis Minnesota 55408 (US)

(72) Inventor: Benton, Ronald, 5215 Zenith Avenue South,
Minneapolis Minnesota 55410 (US)

(74) Representative: Harman, Michael Godfrey et al,
Honeywell Control Systems Ltd. Patent Department
Charles Square, Bracknell Berks RG12 1EB (GB)

(54) **Multistage thermostat.**

(57) A multistage thermostat includes multistage cycler means 36 comprising a primary cycler 37 which controls a primary heating stage (heat pump) and a plurality of cyclers (38 to 40) which control respective stages of secondary heat (electric heat). The setpoint means Tsp is driven by a clock 11 and night setback and day setup means 12. The setpoint means and a temperature sensor Ts are differenced to form a signal for controlling the multistage cycler. The error signal is fed through a proportional constant means 21 and an integrator means 25 in parallel to control the multistage cycler means. To prevent the primary heating stage going off at setback when the temperature is low, and prevent secondary heating stages coming on on setup when the primary heating means can handle the load, there is a large linear temperature separation between the operation of the primary and the secondary heating means.

of droop required to initiate operation of the auxiliary heating stages. To enhance comfort, outdoor sensors are frequently applied to reset or dedroop the thermostat control point. The effectiveness of outdoor reset depends on matching the reset means to the heating system capacity and the design weather conditions.

In order to save energy, it has become commonplace to provide a night setback function to many thermostats along with its associated day setup function. These functions provide for a lower nighttime temperature within the heated building, and a morning pickup or return to the normal daytime ambient temperature. Where night setback and morning pickup are provided, a heat pump may not be operated in its most efficient mode. For example, in the morning when the thermostat is returned to normal daytime ambient temperature control, the heat pump is turned on along with a number of stages of electric heat. This morning pickup therefore utilizes both the primary and secondary heating sources at the same time even though the heat pump alone might be capable of bringing the temperature of the building up to the setpoint temperature if given sufficient time.

In order to prevent this type of a system from having the electric heat staged on at the time of morning pickup, many installations contain outside thermostats which lock the electric heat off if the outdoor ambient is above some predetermined temperature. This type of system is expensive and inefficient. It is expensive in that it requires an outside temperature sensing device and auxiliary control equipment. It is inefficient as many installers misadjust the equipment so that electric heat is brought on even though it would not be required to bring the building up to the normal daytime ambient.

This type of system also has a further fault. Many heat pumps must be operated continuously in extremely cold climates to prevent damage to the equipment. It a thermostat in a building is set down at night, say 5$^{O}$C, typically the

heat pump and all of its auxiliary heat would be turned off until the building cooled down to the nighttime setpoint. This is an undesirable condition as the heat pump can be damaged. It is more desirable that on night setback that the pump be kept in operation if the outdoor ambient is quite low. This allows the heat pump to be protected by continuous operation, and a small amount of heat from the heat pump is supplied as the ambient temperature within the building drifts down to the night setback temperature. Once again, if this type of protection is to be provided, an outdoor sensor and control equipment must be installed to prevent a night setback from turning off the heat pump even though the indoor thermostat is setback to a point which would not otherwise require the heat pump to be active.

In summary, it is common in the control of heat pumps with auxiliary heat, particuarly electric heat, to install outside sensing equipment that reduces control point offset (droop) and overrides any setpoint changes either in setup in the morning or setback at night. The installation of this extra equipment, and the deficiencies in its adjustment, make the operation of heat pump equipment and auxiliary heat marginal in many types of installations. In some localities, the electric utilities supplying power have suggested that heat pump installations be operated without night setback and morning pickup just because of the conditions discussed above.

The object of the present invention is to provide an improved multistage thermostat that is particularly adapted to operate a heating plant having a primary heating source and a secondary heating source, such as a heat pump with auxiliary electric heat.

Accordingly the present invention provides a multistage thermostat for controlling a heating plant having a primary heating means and secondary heating means, comprising temperature sensing means and adjustable temperature setpoint means whose outputs are combined to form

- 4 -

0057574

an error signal which is used to control multistage cycler means which progressively stages the primary and secondary heating means,

characterized by integrator means and proportional constant means through which the error signal is passed in parallel to form a composite error signal which controls the multistage cycler means,

and in that the multistage cycler means incorporates a large linear separation between the operation of the primary and the secondary heating means.

The present system provides for night setback and morning setup or pickup in a manner that will most efficiently utilize the operation of a heat pump without unnecessarily causing the auxiliary heat to become energized. The present system accomplishes this mode of operation without any type of outside sensing or field adjustment of outside located equipment.

The present system can provide multistage control of any number of stages of heating equipment without offset or droop without any type of outside sensing or field adjustment of outside located equipment.

In its preferred form, the present system has an internal clock that provides time control for night setback and morning setup. When a large change in the setpoint is provided to the thermostat by the clock, the thermostat is capable of operating a heat pump and auxiliary heat in an efficient manner. In morning setup, the system provides for the energization of the heat pump but generally keeps the auxiliary heat in a deenergized state. If the heat pump is unable to pick up the heating load within a preestablished period of time, the additional stages of electric heat are energized to pick up the load in a more conventional manner.

When the thermostat is setback at night, the setback operation provides for deenergizing the heat pump in light load situations, such as when the outdoor temperature is mild. If the outdoor temperature is rather severe, the setback function does not remove the energizing potential from the heat pump but allows it to continue to operate, thereby preventing damage to the system.

The function described in control of the heat pump in setup and setback is accomplished by operating the integrator means, which has a stored time integral value of the deviation or error in control point from setpoint, in parallel with the proportional type of control system and summing the two signals together as a continuous composite error signal. This composite error signal is then supplied to the multistage cycler with a number of stages equal to the number of stages of the heat pump and the auxiliary electric heat. Each of the multistage cycler means stages is offset by a small number of degrees of composite error to control the off-on cycling of each individual stage, with the exception of the differential that occurs between the heat pump and the auxiliary heat. The differential that occurs between the heat pump and the auxiliary heat is created by deliberate design of the multistage cycler means to provide a linear signal separation or deadband in the effect of the composite error on the cycler output. The linear signal separation is a substantial flat signal that separates the heat pump from the auxiliary heat cycling of the multistage cycler means. This allows the heat pump to be operated without bringing on or turning off the auxiliary heat until the integrator means has had a chance to process the linear signal separation. This prevents the auxiliary heat from coming on in morning pickup until a desired time interval has occurred, allowing the heat pump to provide full control where possible. The presence of the parallel integrator channel also eliminates control point offset or droop once the setpoint change transient has been completed.

A multistage thermostat in accordance with the invention will now be described, by way of example, with reference to the drawings, in which:-

Figure 1 is a block diagram of the thermostat, and;

Figure 2 is a graph of its operation.

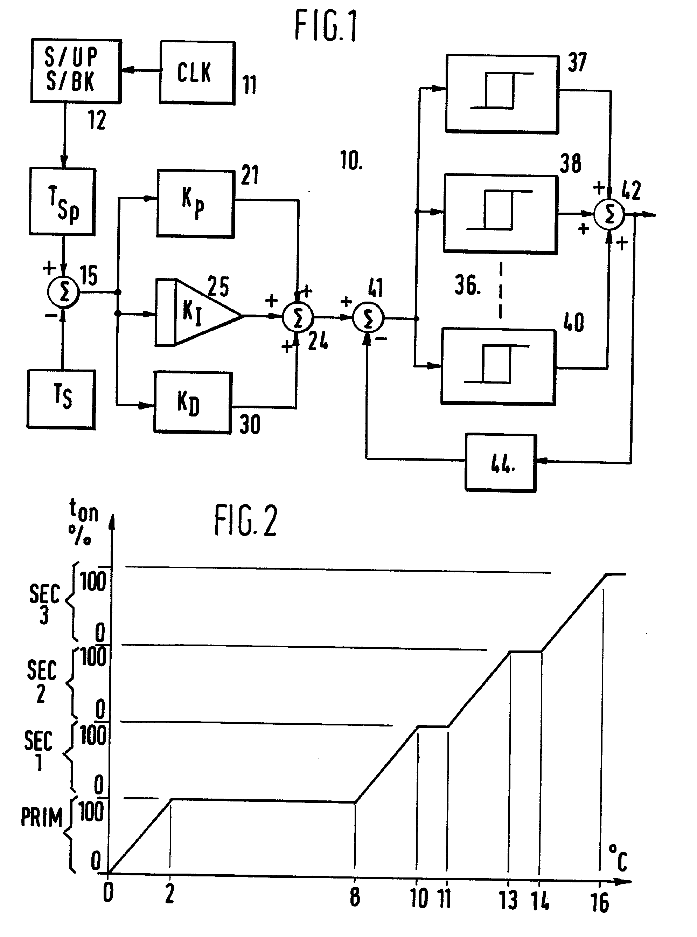

Figure 1 shows a multistage thermostat 10 for controlling a heat pump as the primary heating means and stages of electric heat as the secondary heating means.

The thermostat 10 includes a clock 11 comprising a crystal controlled oscillator and frequency divider means to provide a series of accurately timed clock pulses, which are used for providing for night setback functions and morning setup functions. The night setback function and its accompanying setup function are performed by conventional means 12, which are controlled from the clock 11 and provide an output which is used to change a temperature setpoint means Tsp, the setpoint temperature Tsp being the conventional setpoint of the thermostat. In the present thermostat, a single setback setpoint change and a single setup or morning pickup change is programmed by means 12.

Thermostat 10 has a further input from a temperature sensing means Ts which provides a signal responsive to the ambient temperature to be controlled by the heat pump and electric heat controlled by the thermostat means 10.

The outputs of the temperature sensing means Ts and the variable temperature setpoint means Tsp are summed in a first summing means 15, which produces an output representative of a current temperature error that exists between the temperature Tsp that is set into the thermostat 10, and the temperature Ts which is sensed by the thermostat 10.

The current temperature error is fed to a signal processing means which is made up of three signal processing paths or channels. The first signal processing channel includes a proportional constant means 21; the second processing channel 25 is an integrating means with a stored time integral value of the temperature error; and the third signal processing channel is a differentiating or rate determining means 30 producing an output consisting of the time rate of change of the current temperature error. The three means 21, 25, and 30 are all connected to a second summing means 24.

While three processing channels are present in the signal processing means, the system basically operates with the integrator means 25 in combination with the proportional constant means 21; the differentiating means 30 is optional, and operates conventionally.

The summing means 24 feeds a multistage cycler means 36 having a number of stages 37, 38, and 40. There are as many stages 37, 38, and 40 as there are primary and secondary heating means in the system that is to be controlled by the thermostat 10. Each of the stages 37, 38, and 40 is a conventional cycler type stage having an off-on hysteresis type differential control function. The hysteresis loops within the individual stages 37, 38, and 40 are offset from one another so that changes between "off" and "on" states for different stages do not overlap.

The multistage cycler means 36 further has two summing means 41 and 42. The summing means 41 receives the continuous composite error signal from the signal processing means and supplies a summed signal which is a summation of the signal from summing means 24 and the signal from a conventional anticipation means 44. The anticipation means 44 is optional, and is any type of signal source compatible with the summation means 41 that is energized upon operation of any of the stages 37, 38, or 40 and supplies a lag signal as negative feedback to anticipate the operation of the system. The system output is the output of the summing means 42.

The summing means 41 feeds the stages 37, 38, and 40, which feed the summing means 42. This supplies the heating plant (not shown) with a staged output signal responsive to the continuous composite error signal from 24 from the signal processing means 20 to progressively stage the primary heating means and the secondary heating means of the heating plant, with the operation of the primary and the secondary heating means being separated by a linear signal separation. Alternatively, the outputs of 37, 38, and 40 of the hysteresis means could be used individually to stage the heating means: output 37 on the primary means, and 38 and 40 on the secondary means.

Figure 2 is a graph of the percent on-time of the primary and secondary heating means plotted against the composite error signal on conductor 35. The percent on-time for each of the stages is shown in the Y axis from 0% to 100% for each of the primary and the secondary stages of heat. The composite error signal 35 is the temperature signal from the signal processing means 20. It will be noted that the primary heating means begins operating at $0^{o}C$ of composite error signal , and rises linearly until it reaches the maximum or 100% on-time at the composite error signal of $2^{o}C$. The curve then has a flat portion representing the linear signal separation between the primary heating plant (100% on), and the auxiliary stages of heat. At a composite error signal of about $8^{o}C$, the curve begins to rise again. This indicates that the first auxiliary stage of heat, typically electric heat, would be on between a 0% on-time at $8^{o}C$ and a 100% on-time at $10^{o}C$. There is an approximately $2^{o}$ proportional band for the first stage of electric heat.

At this point a separation of approximately $1^{o}C$ occurs between the first stage of auxiliary heat and the second stage of auxiliary heat. This $1^{o}$ difference in composite error signal is the offset that occurs between the processing channels within the multistage cycler means 36, with the hysteresis curves of the two stages being offset from one another. At $11^{o}C$ the second stage auxiliary heat comes on and rises until 100% on-time at 73 reached at $12^{o}C$. The next $1^{o}$ flat portion of the curve is again the differential between the next two stages in the multistage cycler means 36. At $14^{o}C$ the final stage of electric heat is energized and rises until 100% on-time is reached at $16^{o}C$.

An important feature of this curve is the linear signal separation portion between the 100% on-time of the first stage at $2^{\circ}C$ and the 0% on-time of the first auxiliary stage at $8^{\circ}C$. This interval covers a composite error signal of about $6^{\circ}$, and this separation is used to ensure that the heat pump will be operated properly with respect to the setup and setback functions, along with properly anticipating or controlling with respect to the outdoor ambient, without the need of having any outdoor ambient sensor or control.

In operation, the easiest mode to consider is the morning pickup or setup of the thermostat either by the clock means 11 or by a sudden, large manual change in the setpoint Tsp. Assume that a setpoint change occurs when the composite error signal 35 is in the range $0^{\circ}$ to $2^{\circ}$ of the curve of Figure 2, where the heat pump would be cycling in order to control the load. A sudden setup of the system is processed in the signal processing means 20 simultaneously by the proportional constant means 21 and the integrator means 25. The proportional means 21 causes the composite error signal 35 to increase immediately by an amount equal to the change in setpoint Tsp. For a change in setpoint of $6^{\circ}$ or less, the composite error signal 35 would move to the $2^{\circ}$ to $8^{\circ}$ segment of Figure 2 causing the cycler means 35 to lock on the primary heat stage at 100% on-time without turning on any auxiliary heat stages.

Meanwhile, the integrator means 25 starts to increase its output 27 at a rate proportional to the magnitude of the current error signal 16. The integrator means 25, even though a substantial setup has occurred in the setpoint Tsp, causes the composite error signal 35 to remain for a period of time in the flat $2^{\circ}$ to $8^{\circ}$ region of linear signal separation between the primary stage of heat and the auxiliary stages of heat. The linear separation remains in operation for a significant period of time and prevents the auxiliary heat from coming on initially. In a well designed system, the time in the linear signal separation region would be approximately 2 hrs. If the system was satisfied in the 2 hr interval, the heat pump would again take over full control and would start modulating back in the section of the curve 61 between the 0% and 100% on-time. If the outdoor ambient is sufficiently cold, or the setpoint change is sufficiently large, so that the heat pump alone is not able to bring the composite error signal back out of the linear separation signal portion of the curve, the composite error signal 35 will continue to increase in magnitude until it reaches 8°C, at which time the first stage of auxiliary or electric heat will come on. As the system load moves further and further to the right in Figure 2, that is as the composite error signal 35 becomes larger, more and more electric heat will be brought on until the system is satisfied and a stable operating point is reached. If the outdoor ambient is quite cold the rate at which this occurs is more rapid than if the outdoor temperature is moderate. At very large load conditions in which the composite error signal 35 is operating in the region of Figure 2 to the right of 8°C prior to the setpoint change, the linear signal separation effect will be bypassed and stages of auxiliary heat will be turned on rapidly.

On night setback, if the system has been operating under a heavy load condition indicating a low outdoor temperature at which it is undesirable to turn off the heat pump, the operating point of the composite error signal 35 will be to the right of 8°C. The sudden setback of the system will bring the operating point of the composite error signal 35 into the linear signal separation region 2°C to 8°C. This will prevent the heat pump or primary heating stage from being turned off immediately with a setback setpoint change. If the setback temperature is integrated out over the linear 2° to 8° portion of the curve in a sufficient period of time, the heat pump will turn off. This indicates a moderate outdoor ambient. If the setback occurs with a severe outdoor ambient, the composite error signal 35 will never be able to reach the point at which the heat pump is removed from operation and it will operate continuously trying to meet the demands of the ambient to which the system is applied.

The contents of our copending application "Multistage Thermostat", No.      , filed simultaneously herewith, are hereby incorporated in this specification. This copending application describes a closely related invention.

0057574

## CLAIMS

1. A multistage thermostat for controlling a heating plant having a primary heating means and secondary heating means, comprising temperature sensing means (Ts) and adjustable temperature setpoint means (Tsp) whose outputs are combined (at 15) to form an error signal which is used to control multistage cycler means (36) which progressively stages the primary and secondary heating means, characterized by integrator means (25) and proportional constant means (21) through which the error signal is passed in parallel to form a composite error signal which controls the multistage cycler means, and in that the multistage cycler means incorporates a large linear separation ($2^O$ to $8^O$ band, Fig.2) between the operation of the primary and the secondary heating means.

2. A multistage thermostat according to Claim 1, characterized by a clock (11) and time set means (12) which adjust the temperature setpoint means (Tsp) by amounts within the linear separation.

3. A multistage thermostat according to either previous claim, characterized by anticipation means (44) which give negative feedback around the multistage cycler means (36).

4. A multistage thermostat according to any previous claim characterized in that the multistage cycler means comprises a respective cycler stage (37, 38, ... 40) for each stage of heating means, the cycler stages each having a hysteresis and the cycler stages of the secondary heating means, if the secondary heating means comprise a plurality of stages, being separated by temperature differentials.

5. A multistage thermostat according to any previous claim characterized by differentiating means (30) connected in parallel with the integrator means (25) and proportional constant means (21).

FIG.1

FIG.2

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | DE - A - 2 510 992 (HYDROTHERM GERATEBAU) <br><br> * page 6, line 4 - page 13, line 4; figures 1,2,3 * | 1,3,4 | G 05 D 23/19 |
| A | EP - A - 0 007 497 (CARRIER CO.) <br><br> * page 7, line 1 - page 9, line 7; figures 1,2 * | 1 | |
| A | FR - A - 2 451 548 (TOTALGAZ) <br><br> * page 2, line 26 - page 3, line 18; figure 1 * | 1 | TECHNICAL FIELDS SEARCHED (Int.Cl. 3) <br><br> G 05 D <br> G 05 B <br> F 24 D |
| A | GB - A - 879 381 (AKTIEBOLAGET TERMOSTATIC) <br><br> * page 2, lines 38-97; figure 1* | 1 | |
| A | CH - A - 377 562 (J. STONE & CO.) <br><br> * page 2, lines 50-109; figures* | 1 | |
| A | DE - A - 2 515 147 (VEB KOMBINAT) <br><br> * page 6, line 1 - page 7, line 14; figures 1,2 * | 3,4 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 23-03-1982 | HOUILLON |

EPO Form 1503.1 06.78